# EUROPEAN PATENT SPECIFICATION

(11) **EP 2 182 812 B1**
(45) Date of publication and mention of the grant of the patent: **29.03.2017**
(21) Application number: 07857273.2
(22) Date of filing: 06.12.2007
(51) Int. Cl.: A23B 7/04, A23L 19/12, A23L 19/18

(54) **METHOD FOR THE PREPARATION OF POTATOES WITH UNCOOKED OIL FIT TO BE COOKED AND PREPARED POTATOES OBTAINED THEREBY**
VERFAHREN ZUR HERSTELLUNG VON GARFERTIGEN KARTOFFELN MIT UNERHITZTEM ÖL, UND SO ERHALTENE ZUBEREITETE KARTOFFELN
PROCÉDÉ DE PRÉPARATION DE POMMES DE TERRE CUITES AVEC DE L'HUILE NON CUITE, ET POMMES DE TERRE PRÉPARÉES PAR LEDIT PROCÉDÉE

(30) Priority: 02.08.2007 IT BO20070550
(43) Date of publication of application: 12.05.2010
(73) Proprietor: Pizzoli S.P.A., 40054 Budrio (IT)
(72) Inventor: BOTTARDI, STEFANO, I-40062 Molinella (BO) (IT)
(74) Representative: Zanoli, Enrico
(86) International application number: PCT/EP2007/063432
(87) International publication number: WO 2009/015697

(56) References cited:
- EP-A- 0 026 565
- WO-A-2004/082400
- DE-A1- 10 359 537
- GB-A- 2 002 624
- JP-A- 2 100 648
- US-A- 3 205 074
- US-A- 5 891 494

## Description

### TECHNICAL FIELD

The present invention relates to the agroindustrial field and it refers to a method for preparing, with uncooked oils, cut potatoes, for example stick shaped, fit for the cooking for example in oven, in order to provide a healthy food, enriched with precious oils containing also mono-unsaturated and poly-unsaturated fatty acids and comparable for organoleptic aspect and property to the pre-fried stick-potatoes but, differently from these, without added pre-fried fat, in particular containing low saturated fatty acids. The present invention refers furthermore to the prepared potatoes obtained by this method.

In particular the method of the present invention allows to prepare deep-frozen potatoes prepared for the final cooking, in domestic environment, in community, in restaurants and in general where the food is supplied, in oven, by means of hot air jet or by other methodologies of cooking also without adding fats.

Such method of preparation allows to obtain potatoes, after final cooking, comparable in terms of aspect, consistency, fragrance and taste to those fried and stick cut, as an example with rectangular or square cut section having dimensions of 6x6 mm, 7x7 mm, 9x9 mm, 10x10 mm, 11x11 mm, 12x12 mm, 14x14 mm and greater, or cut having a disc shape and generally with straight, curved or waved shapes and having any other shape, with a low content of fats added uncooked during the preparation method.

### BACKGROUND ART

The known methods of industrial preparation comprise the steps of peeling the potatoes tubers by steam or by mechanical abrasion; brushings the tubers in order to remove the superficial peel and subsequently rinsing them in order to remove the peel residuals and the superficial gelatinized starch after the peeling operation in case of steam peeling.

Such known methods further provide the subsequent selection, for instance by means of electronics system, of the tubers in order to eliminate those excessively defective because of the superficial spots presence.

In the known methods, after the selection, is provided the step of preheating the tuber which, once reached the temperature ranging between 50°C and 60°C, provides the best cut yield and the step of the mechanical cut, that implies the formation of sticks for the final eating, which sticks are subjected to a further electronic selection in order to remove the defective potato sticks, as an example those with grey or greens spots; a step of cooking the sticks follows this latter step.

The cooking of these methods provides a first burning or scalding at 90° C for a brief period of time, in order to eliminate the oxidations caused by an enzymatic origin of the polyphenolic substances naturally present in the tubers, a second burning or scalding carried out at inferior temperatures, from a minimum of 65° C to a maximum of 75° C, which has the aim to create the gelatinization of the starch present in the potatoes tubers and to eliminate the reducing sugars and the metal ions, as an example cupreous and cupric, ferrous and ferric ions that in general act as oxidative catalyst.

Said second burning or scalding is followed by a conveying through an aqueous solution containing sodium acid pyrophosphate, by a drying step at different temperatures in function of the dry substance of the sticks in order to eliminate the superficial water, and part of the free water present inside the sticks and by a step of equilibrating the dampness which precedes a pre-frying.

Said pre- frying is known as a fast system of dehydration which occurs because of the product immersion in oil at high temperature ranging from 106° C to 185 °C. In this step of fast superficial dehydration of the stick, a further loss of water exiting from the stick occurs and a simultaneous pre-frying oil penetration, typically palm fractionated oil, refined and/or hydrogenated with a high saturation level in order to guarantee a best stability at the high temperatures of the pre-frying.

Said oil that penetrates into the stick determines the contents of the fat added in the final product.

The pre-frying step guarantees the formation of a starch-protein complex which gives rise to the cooking "crust".

A cooling and freezing step completes the known traditional technologic method.

The superficial crust of the sticks is subsequently enhanced by the final homemade or professional cooking, in oven or with the re-frying which introduces further oil in the sticks.

EP 0 026 565 discloses a frozen sliced potatoe product that simulates deep-fried potatoes and a method of manufacturing it. The method teaches to fry the sliced potatoes before freezing them. Par-frying is carried out after soaking the sliced potatoes in oil, therefore the teaching to fry potatoes before freezing them is clear.

WO 2004/082400 discloses a method of preparing a potatoe based food product. The method teaches that the potatoes coated with oil (and other ingredients) are treated at a temperature of between 240 and 285°C, and that the par-cooked chips are then frozen. Therefore, it is clear the teaching that the potatoes are actually deep-fried before freezing.

US 5,891,494 discloses the preparation of potatoe crisps and chips. The method includes to coat potatoes slices with an emulsion containing 38-62% of a starchy material and 30-60% of oil and aims at obtaining reduced fat crisps whose fat content is 5 - 7%. Therefore starch and oil are applied simultaneously as ingredients of the same emulsion.

DE 103 59 537 A1 discloses to treat potatoes according to several process steps before finally freezing them. The process includes coating potatoes and frying the coated potatoes at a temperature of 160-180 °C for 30-50 seconds. This is the last process step before freezing, as reflected also by the flow-chart shown in the figure.

GB 2 002 624 A discloses simulated deep fat fried foods prepared with a method that includes coating the food with an emulsified blend comprising 50-100 parts of vegetable oil, then baking the coated food at a temperature of 190-232 °C for 5 - 20 minutes. Therefore, it is clear that the method does not teach to freeze potatoes with uncooked oil but only with cooked oil.

JP 02-100648 discloses the production of potatoes chips. The method of production includes process steps but does not discloses the application of starch prior to the application of oil.

US 3,205,074 discloses a method of treating food product prepared in a fluidized bed including treating potatoe chips with up to 30% of oil, followed by a heating step. Example 1 and 2 teach to add 15% oil, while Example 3 teaches to add 19.9% oil, Example 4 teaches to add 29.4 % oil and Example 5 teaches to add 29.8% and 26.1% of oil. It is apparent that the method includes using very large amounts of fats.

A drawback of said known methods consists in that they provide cut potatoes very rich of the pre-frying oil which, as seen, is of the saturated type which according to the nutritionist makes them potentially harmfulness for the consumer health.

### DISCLOSURE OF THE INVENTION

An object of the present invention is to propose a method for the preparation of cut potatoes without any pre-frying fats, enriched with uncooked oils having a high nutritional value and fit to a final cooking in order to provide to the consumers cut potatoes similar to fried potatoes but with reduced percentage of fat.

A further object is to provide a method which allows to use oils rich of mono-unsaturated or poly-unsaturated fatty acids which are preferable from the healthy point of view.

Other object is to propose a method which does not subject the fat to excessive thermal stress.

Another object is to propose a method fit to provide cut potatoes, maintained by means of freezing or deep freezing and which may be subjected to a final cooking without fats or added oils providing cut potatoes ready to be eaten comparable in terms of aspect, taste, fragrance and consistency to the homemade fried potatoes.

Further object id to propose a simple, easy controllable, feasible and safe method.

Other object is to propose cut potatoes conserved by means of deep freezing or freezing, which may be eaten after final cooking without adding further fats and oils, and provided with organoleptic characteristics, aspect and consistency comparable to the fried potatoes ones.

Further object is to propose a method fit to provide potatoes cut with stick shape obtained by means of said method.

### BEST MODE OF CARRYING OUT THE INVENTION

The invention is as defined in the claims.

The method, object of the present invention, for the preparation with uncooked oils, of cut potatoes fit to the final cooking and the eating, provides the following sequence of steps.

After possible washing of the potatoes the method provides to carry out the peeling by stem or by abrasion, and the cleaning of said potatoes peeled by brushing or rinsing them immediately after peeling them and provides to subject them to a selection, for instance an automatic selection, in order to eliminate the excessively damaged or deteriorated tubers.

The rinsing, in addition to remove the peel residuals, removes the superficial starch gelatinized in case of stem peeling.

The successive steps of the method consist in the pre-heating of the potatoes at a temperature ranging between about 50° C and 60° C and, once reached a predefined temperature, in cutting the potatoes with a stick, disc or other shape, and in carrying out a stick selection, for instance an automatic selection, in order to discard the spotted, damaged, and non conform ones.

The pre-cooking step comprises at least a first burning or scalding of the sticks followed by a second burning or scalding thereof.

The first burning or scalding occurs at a temperature of about 90° C for brief period of time and the second burning or scalding occurs at inferior temperatures, comprised between a minimum of about 65 °C and a maximum of about 75° C.

After the burning or scalding steps, and before applying the starch or its derivatives, the sticks are immersed in water at a temperature comprised between about 40° C and about 50 °C and, in sequence, immersed in an aqueous solution containing sodium acid pyrophosphate.

The distribution of the starch over the sticks occurs applying thereto an aqueous solution of one or more starches or their derivatives.

The method particularly provides to use an aqueous solution of modified rice and/or potatoes and/or maize starches, singularly or in any combination thereof, with a concentration comprised between about 0.5 % and about 2% and to maintain said aqueous solution of modified starches at a maintaining temperature of the gelatinization state of the amylopectins.

Immediately after the application of the aqueous solution of starches, the method provides a drying step of the sticks, with a thermal gradient almost independent from the dry substance of the potatoes and comprised between about 60° C and about 90° C, and a step of humidity equilibration of the sticks having a duration comprised between 5 and 13 minutes.

The method provides that the application of the aqueous solution of the modified starch over the surface of the sticks is carried out exactly between the immersion step of the sticks into the aqueous solution containing sodium acid pyrophosphate and the drying step.

Immediately after the equilibration, the method provides the conveying of the sticks, with weighing them during their motion by means of load cells, until putting them into a cylinder which rotates around its reclining axis.

Once putted into the rotating cylinder, the sticks are strewn with a predefined percentage of salt quantity in respect to the stick weight and they are sprinkled with oil in a predefined percentage in respect to the weight of the sticks.

The method provides to put into the cylinder micronized salt with glanulometry comprised between about 200 micron and about 400 micron and to put therein an oil quantity comprised between about 0.5% and about 3% of the sticks weight.

The method particularly provides to use uncooked oil having high nutritional features with mono-unsatured and/or poly-unsatured fatty acid, for instance pure or mixed sunflower or preferably extra-virgin olive oil.

In order to fix the permanence time of the sticks in the cylinder, the method provides to modify opportunely the inclination of the cylinder rotation axis.

Finally the method provides to freeze, or cool, the sticks with the starch or their derivatives and with the oil, making them ready for the packaging, the delivering, the final cooking, also without added oils or fats, and the eating thereof.

The method provides also a possible aromatization step of the stick surface with natural and/or nature identical and/or artificial aromas and to carry out the aromatization step simultaneously to or near the oil sprinkling step.

The cut potato, prepared for the final cooking, object of the present invention may be obtained by means of the inventive method.

Each piece, or stick, disc or the like of the potato is partially cooked and enriched of a salt and an uncooked oil.

The stick surface has a modified starch contribution also in combination with the components of the potato and said surface has sodium acid pyrophosphate and/or produced by its combination with potato components, and possible natural and/or nature identical and/or artificial aromas.

In addiction the cut potato is frozen or cooled and packaged.

An advantage of the present invention is to provide a method for the preparation of cut potatoes without any pre-frying fats, enriched with uncooked oils having a high nutritional value and fit to a final cooking in order to provide to the consumers cut potatoes comparable to the fried potatoes but with reduced percentage of fat.

A further advantage is to provide a method which allows to use mono-unsaturated or poly-unsaturated oils which are preferable from the healthy point of view.

Other advantage is to provide a method which does not subject the fat to excessive thermal stress.

Another advantage is to provide a method fit to provide cut potatoes, maintained by means of freezing or cooling and which may be subjected to a final cooking without fats or added oils providing cut potatoes ready to be consumed comparable in terms of aspect, taste, fragrance and consistency to the homemade fried potatoes.

Further advantage is to provide a simple, easy controllable, feasible and safe method.

Other advantage is to provide cut potatoes conserved by means of deep freezing or freezing, which may be eaten after final cooking without adding further fats and oils, and provided with organoleptic features, aspect and consistency comparable to the fried potatoes ones.

Further advantage is to provide a method fit to provide cut potatoes having stick shape, or any possible shape, and to provide cut potatoes obtained thereby.

## Claims

1. Method for the preparation with uncooked oils of frozen cut potatoes fit to be consumed after a final cooking, comprising at least the steps of peeling, cleaning, selecting, and cutting potatoes to obtain potato sticks or pieces having other shapes, said method being **characterized by** further comprising:
- at least a step of pre-cooking said pieces or sticks and a step of applying onto the surface of the sticks a starch or derivatives thereof in an aqueous solution and, in sequence, subjecting the sticks to a step of drying;
- carrying out, after said step of drying, a treatment for equilibrating the superficial dampness of said sticks or pieces for a period of time ranging between 5 minutes and 13 minutes;
- sprinkling said sticks or pieces, after the dampness equilibration, with a quantity of oil comprised between 0.5 and 3% of the weight of said sticks or pieces, said oil being uncooked, said sprinkling being carried out in a cylinder rotating around its own reclining axis and by putting said oil into said cylinder;
- deep freezing, or freezing, said sticks or pieces enriched with said starch or derivatives thereof and with said uncooked oil, making them ready for packaging and final cooking, without added oils or fats.

2. Method according to claim 1, **characterized by** strewing said sticks or pieces inside said cylinder, before sprinkling, with salt in a predefined percentage in respect to the sticks weight.

3. Method according to claim 2 **characterized by** using micronized salt with granulometry ranging from 200 micron to 400 micron.

4. Method according to claim 1 **characterized by** tilting the rotation axis in order to fix the permanence time of the sticks or pieces inside the cylinder.

5. Method according to claim 1 **characterized by** using at least an oil with mono-unsaturated and/or poly-unsaturated fatty acids.

6. Method according to claim 5 **characterized by** using at least one of a sunflower oil and extra- virgin olive oil.

7. Method according to claim 1 **characterized by** carrying out said cleaning step by brushing and rinsing said potatoes immediately after the peeling step.

8. Method according to claim 1 **characterized by** pre-heating said potatoes at a temperature ranging between 50° C and 60° C before the cutting step.

9. Method according to claim 1 **characterized in that** the pre- cooking step comprises at least a first burning or scalding of the sticks followed by a second stick burning or scalding.

10. Method according to claim 9 **characterized by** carrying out the first burning or scalding at a temperature of about 90° C for brief period of time and carrying out the second burning or scalding at lower temperatures, ranging between a minimum of 65° C and a maximum of 75°C.

11. Method according to claim 1 **characterized by** immersing said sticks or pieces, already exposed to the at least a pre-cooking step and before the application of starch or derivatives thereof, in water at a temperature comprised between 40° C and 50° C and, in sequence, immersing them in aqueous solution containing sodium acid pyrophosphate.

12. Method according to claim 1 **characterized by** using in the aqueous solution modified starches with concentration ranging between 0.5% and 2%.

13. Method according to claim 1 **characterized by** carrying out said drying step with a thermal gradient comprised between 60° C and 90° C.

14. Method according to claim 11 **characterized by** applying onto the surface of said sticks or pieces said starch or derivatives thereof between the immersion step of the sticks in the aqueous solution containing sodium acid pyrophosphate and the drying step.

15. Cut potato, prepared for the final cooking, obtained by the method of any of the previous claims **characterized in that** each piece or stick of the potato is at least partially cooked and enriched with salt and uncooked oil.

16. Cut potato, according to claim 15, **characterized in that** its surface has sodium acid pyrophosphate and/or its combination products with the potato components, and possible natural and/or nature identical and/or artificial aromas.

17. Cut potato, according to claim 15, **characterized by** being deep frozen or frozen.

## Patentansprüche

1. Verfahren zum Zubereiten gefrorener, geschnittener Kartoffeln mit ungekochten Ölen, die nach einem abschließenden Kochen zum Verzehr bereit sind, aufweisend zumindest die Schritte des Schälens, Reinigens, Auswählens und Schneidens der Kartoffeln, um Kartoffelstäbchen oder Stücke mit anderen Formen zu erhalten, wobei das Verfahren **dadurch gekennzeichnet ist, dass** es ferner Folgendes aufweist:
- zumindest einen Schritt des Vorkochens der Stücke oder Stäbchen und einen Schritt des Aufbringens einer Stärke oder von Derivaten einer Stärke in einer wässrigen Lösung auf die Oberfläche der Stäbchen und darauffolgend ein Schritt, bei dem die Stäbchen einer Trocknung unterzogen werden;
- Durchführen, nach dem Trocknungsschritt, einer Behandlung zum Ausbalancieren der oberflächlichen Feuchtigkeit der Stäbchen oder Stücke während eines Zeitraums, der zwischen 5 Minuten und 13 Minuten lang ist;
- Beträufeln der Stäbchen oder Stücke, nach dem Ausbalancieren der Feuchtigkeit, mit einer Menge an Öl, die zwischen 0,5% und 3% des Gewichts der Stäbchen oder Stücke ausmacht, wobei das Öl ungekocht ist und das Beträufeln in einem Zylinder durchgeführt wird, der um seine eigene Liegeachse rotiert und wobei das Öl in den Zylinder eingebracht wird;
- Tiefgefrieren oder Gefrieren der Stäbchen oder Stücke, die mit der Stärke oder Derivaten der Stärke und mit dem ungekochten Öl verfeinert sind, wodurch sie für das Verpacken und das abschließende Kochen vorbereitet werden, ohne dass eine Zugabe von Ölen oder Fetten erfolgt.

2. Verfahren nach Anspruch 1, **dadurch gekennzeichnet, dass** die Stäbchen oder Stücke vor dem Beträufeln im Inneren des Zylinders mit einem vorgegebenen Prozentsatz an Salz im Verhältnis zu dem Gewicht der Stäbchen bestreut werden.

3. Verfahren nach Anspruch 2, **dadurch gekennzeichnet, dass** mikronisiertes Salz mit einer Granulometrie zwischen 200 Mikron und 400 Mikron verwendet wird.

4. Verfahren nach Anspruch 1, **dadurch gekennzeichnet, dass** die Rotationsachse geneigt wird, um die Verbleibezeit der Stäbchen oder Stücke im Inneren des Zylinders festzulegen.

5. Verfahren nach Anspruch 1, **dadurch gekennzeichnet, dass** zumindest ein Öl mit einfach ungesättigten und/oder mehrfach ungesättigten Fettsäuren verwendet wird.

6. Verfahren nach Anspruch 5, **dadurch gekennzeichnet, dass** zumindest eines von Sonnenblumenöl und nativem Olivenöl extra verwendet wird.

7. Verfahren nach Anspruch 1, **dadurch gekennzeichnet, dass** der Reinigungsschritt durch Bürsten und Abspülen der Kartoffeln unmittelbar nach dem Schälschritt durchgeführt wird.

8. Verfahren nach Anspruch 1, **dadurch gekennzeichnet, dass** die Kartoffeln vor dem Schneideschritt bei einer Temperatur vorerhitzt werden, die zwischen 50 °C und 60 °C liegt.

9. Verfahren nach Anspruch 1, **dadurch gekennzeichnet, dass** der Vorkochschritt zumindest ein erstes Anbrennen oder Brühen der Stäbchen aufweist, worauf ein zweites Anbrennen oder Brühen der Stäbchen folgt.

10. Verfahren nach Anspruch 9, **dadurch gekennzeichnet, dass** das erste Anbrennen oder Brühen bei einer Temperatur von circa 90 °C für einen kurzen Zeitraum durchgeführt wird und das zweite Anbrennen oder Brühen bei niedrigeren Temperaturen durchgeführt wird, die zwischen einem Minimum von 65 °C und einem Maximum von 75 °C liegen.

11. Verfahren nach Anspruch 1, **dadurch gekennzeichnet, dass** die Stäbchen oder Stücke, die zumindest bereits dem Vorkochschritt unterzogen wurden, vor dem Aufbringen von Stärke oder Derivativen von Stärke bei einer Temperatur in Wasser getaucht werden, die zwischen 40 °C und 50 °C liegt, und wobei sie darauffolgend in eine wässrige Lösung eingetaucht werden, die Natriumsäurepyrophosphat enthält.

12. Verfahren nach Anspruch 1, **dadurch gekennzeichnet, dass** modifizierte Stärke in der wässrigen Lösung zum Einsatz kommt, deren Konzentration zwischen 0,5% und 2% liegt.

13. Verfahren nach Anspruch 1, **dadurch gekennzeichnet, dass** der Trocknungsschritt mit einem Temperaturgradienten zwischen 60 °C und 90 °C liegt durchgeführt wird.

14. Verfahren nach Anspruch 11, **dadurch gekennzeichnet, dass** auf die Oberfläche der Stäbchen oder Stücke die Stärke oder die Derivate von Stärke zwischen dem Eintauchschritt der Stäbchen in die wässrige Lösung, die Natriumsäurepyrophosphat enthält und dem Trocknungsschritt aufgebracht wird.

15. Geschnittene Kartoffel, vorbereitet für das abschließende Kochen, erhalten durch das Verfahren nach einem der vorgenannten Ansprüche, **dadurch gekennzeichnet, dass** jedes Stück oder Stäbchen der Kartoffel zumindest teilweise gekocht und mit Salz und ungekochtem Öl verfeinert ist.

16. Geschnittene Kartoffel nach Anspruch 15, **dadurch gekennzeichnet, dass** ihre Oberfläche Natriumsäurepyrophosphat und/oder Kombinationsprodukte desselben mit den Kartoffelbestandteilen, sowie mögliche natürliche und/oder naturidentische und/oder künstliche Aromen aufweist.

17. Geschnittene Kartoffel nach Anspruch 15, **dadurch gekennzeichnet, dass** sie tiefgefroren oder gefroren ist.

## Revendications

1. Procédé de préparation, utilisant des huiles non cuites, de pommes de terre congelées et coupées, prêtes à être consommées après une cuisson finale, comprenant au moins les étapes d'épluchage, de nettoyage, de sélection, et de coupe des pommes de terre pour obtenir des bâtonnets ou des morceaux de pommes de terre ayant d'autres formes, ledit procédé étant **caractérisé en ce qu'**il comprend en outre :
- au moins une étape de pré-cuisson desdits morceaux ou bâtonnets et une étape d'application sur la surface des bâtonnets, d'amidon ou de ses dérivés en solution aqueuse, puis, en séquence, à soumettre les bâtonnets à une étape de séchage ;
- la mise en oeuvre, après ladite étape de séchage, d'un traitement pour équilibrer l'humidité superficielle desdits morceaux ou bâtonnets pendant une période de temps comprise entre 5 minutes et 13 minutes ;
- l'aspersion desdits morceaux ou bâtonnets, après l'équilibrage de l'humidité, avec une quantité d'huile comprise entre 0,5% et 3% du poids desdits bâtonnets ou morceaux, ladite huile étant non cuite, cette aspersion étant effectuée dans un cylindre tournant autour de son propre axe d'inclinaison et par ajout de ladite huile dans ledit cylindre,
- la surgélation, ou la congélation, desdits bâtonnets ou morceaux enrichis par ledit amidon ou ses dérivés et de ladite huile non cuite, ce qui les rend prêts pour l'emballage et la cuisson totale, sans des huiles ou de graisses ajoutées.

2. Procédé selon la revendication 1, **caractérisé en ce que** l'on saupoudre lesdits morceaux ou bâtonnets se trouvant à l'intérieur du cylindre, avant aspersion, avec du sel en un pourcentage prédéfini par rapport au poids des bâtonnets.

3. Procédé selon la revendication 2, **caractérisé en ce que** l'on emploie du sel micronisé présentant une granulométrie comprise entre 200 microns et 400 microns.

4. Procédé selon la revendication 1, **caractérisé en ce que** l'on incline l'axe de rotation afin de fixer le temps de séjour des bâtonnets ou morceaux à l'intérieur du cylindre.

5. Procédé selon la revendication 1, **caractérisé en ce que** l'on utilise au moins une huile avec des acides gras mono-insaturés et/ou polyinsaturés.

6. Procédé selon la revendication 5, **caractérisé en ce que** l'on utilise au moins une huile de tournesol et/ou d'huile d'olive extra vierge.

7. Procédé selon la revendication 1, **caractérisé en ce que** ladite étape de nettoyage est effectuée par brossage et rinçage desdites pommes de terre, immédiatement après l'étape de pelage.

8. Procédé selon la revendication 1, **caractérisé en ce que** lesdites pommes de terre sont préchauffées à une température comprise entre 50°C et 60°C avant l'étape de coupe de celles-ci.

9. Procédé selon la revendication 1, **caractérisé en ce que** l'étape de pré-cuisson comprend au moins une première cuisson ou un premier échaudage des bâtonnets, suivie d'une seconde cuisson ou d'un second échaudage des bâtonnets.

10. Procédé selon la revendication 9, **caractérisé en ce que** la première cuisson ou le premier échaudage est effectué à une température d'environ 90°C pendant une brève période de temps et **en ce que** la seconde cuisson ou le second échaudage est effectué à des températures plus basses, comprises entre un minimum de 65°C et un maximum de 75°C.

11. Procédé selon la revendication 1, **caractérisé en ce que** lesdits bâtonnets ou morceaux, déjà exposés à au moins une étape de pré-cuisson et avant application d'amidon ou de ses dérivés, sont immergés dans l'eau à une température comprise entre 40°C et 50°C, puis, en séquence, à les immerger dans une solution aqueuse contenant du pyrophosphate acide de sodium.

12. Procédé selon la revendication 1, **caractérisé en ce que** l'on utilise dans la solution aqueuse des amidons modifiés, en une concentration comprise entre 0,5% et 2%.

13. Procédé selon la revendication 1, **caractérisé en ce que** ladite étape de séchage est effectuée à un gradient thermique compris entre 60°C et 90°C.

14. Procédé selon la revendication 11, **caractérisé en ce que** l'on applique sur la surface desdits bâtonnets ou morceaux, ledit amidon ou ses dérivés entre l'étape d'immersion des bâtonnets dans la solution aqueuse contenant du pyrophosphate acide de sodium et l'étape de séchage.

15. Pomme de terre coupée, préparée pour la cuisson finale, obtenue par le procédé selon l'une quelconque des revendications précédentes, **caractérisée en ce que** chaque morceau ou bâtonnet de la pomme de terre est au moins partiellement cuit et enrichi avec un sel et une huile non cuite.

16. Pomme de terre coupée, selon la revendication 15, **caractérisée en ce que** sa surface comporte du pyrophosphate acide de sodium et/ou ses produits à combinaison avec les composants de la pomme de terre, et éventuellement des arômes naturels et/ou de nature identique et/ou artificiels.

17. Pomme de terre coupée, selon la revendication 15, **caractérisée en ce qu'**elle est surgelée ou congelée.
